# EUROPEAN PATENT SPECIFICATION

(11) **EP 3 966 398 B1**
(45) Date of publication and mention of the grant of the patent: **18.09.2024**
(21) Application number: 20723147.3
(22) Date of filing: 07.05.2020
(51) Int. Cl.: E04B 1/74, G01M 3/00, E04B 1/90

(54) **INSULATION PANEL AND SYSTEM**
ISOLIERUNGSPANEEL UND -SYSTEM
PANNEAU D'ISOLATION ET SYSTÈME

(30) Priority: 09.05.2019 EP 19173519
(43) Date of publication of application: 16.03.2022
(73) Proprietor: BASF SE, 67056 Ludwigshafen am Rhein (DE)
(72) Inventor: KICIAK, Thomas, 67056 Ludwigshafen (DE); VON AUENMUELLER, Juergen, 67056 Ludwigshafen (DE); NAU, Marco, 67061 Ludwigshafen (DE); MUELLER, Eva-Maria, 67056 Ludwigshafen (DE); RIES, Klaus, 67056 Ludwigshafen (DE); SCHNEIDER, Fabian, 67061 Ludwigshafen (DE)
(74) Representative: BASF IP Association
(86) International application number: PCT/EP2020/062741
(87) International publication number: WO 2020/225373

(56) References cited:
- EP-A1- 2 663 845
- EP-A1- 3 333 330
- US-A1- 2007 139 208
- US-B1- 10 042 341

## Description

### FIELD OF THE INVENTION

The present invention relates to an insulation panel, a notification system comprising at least one such insulation panel and a use of data provided by at least one such insulation panel.

### BACKGROUND OF THE INVENTION

The use of insulation boards, panels and so on and the use of different insulating materials for sealing floors, roofs and walls is well known in the prior art. For example, documents EP 2 434 478 A1 or EP 2 748 238 B1 disclose compositions and methods for the production and use of such insulation panels. EP 3 333 330 A1 discloses an insulation panel according to the preamble of claim 1.

In this respect, it has turned out to be problematic that after the installation of such insulation panels, it is not easy to determine whether unwanted moisture is present or has penetrated the covered floors, walls or roofs. In practice, such surfaces are examined at regular intervals by experts who determine whether certain insulation panels or surface sections need to be repaired or even renewed. However, during these inspections, it can often only be determined that water has already penetrated certain sections of the surface and that appropriate renovation measures of the penetrated sections are necessary.

During the planning with which insulation panels or insulating materials a certain surface is to be provided, the experts rely on their empirical values, whereby also computer-assisted computation procedures are used by the expert, for example for the determination of thermal insulation values.

It is found that a further need exists to simplify the monitoring of such surfaces and to make in particular a monitoring possible, which can be accomplished also by a not expert. In addition, there is a need to improve the planning of which insulation panels and insulation materials are suitable for which surfaces, in particular to reduce the probability of failure after installation of the insulation panels.

### SUMMARY OF THE INVENTION

In the view of the above, it is an object of the present invention to provide an insulation panel and a notification system comprising at least one such insulation panel supporting maintenance services and the reliability of sealed surfaces by means of at least one such insulation panel. These and other objects, which become apparent upon reading the following description, are solved by the subject-matter of the independent claims. The dependent claims refer to preferred embodiments of the invention

In a first aspect, an insulation panel according to claim 1 is provided. An insulation panel according to the present invention is defined as any insulation material used in a form suitable for covering floors, walls or roofs. Insulation panels usually comprise at least one insulation layer and several layers providing different functions, like vapor barriers, moisture barriers and so on. In practice, above or below an insulation panel further layers of waterproofed material can be used. Typically, insulation panels have a rectangular shape, wherein any other shape can be used within the scope of the present invention. The insulation panels may have also tongue and groove elements facilitating the installation of the insulation panels. If required, separate sealings or sealing materials can be applied between the insulation panels, i.e. in particular at the joints of the insulation panels.

A moisture sensor according to the present invention can be provided by any means suitable for measuring water or moisture content. Notably, it is preferred that the insulation panel does not comprise any separate energy source for the senor unit, the communication interface and/or the memory unit for a stand-alone operation. In this respect, it is preferred that the required energy for measuring and communication is provided by a read-out device, for example, by means of an inductive coupling or the like as used in an RFID-device (radio-frequency identification device). However, depending on the specific installation conditions, it is also possible to add an energy source to the insulation panel, e.g. by an inductive rechargeable battery or by providing prefabricated conductors in the insulation panels which can be connected to an energy source at a centralized feed-in point. The advantage of equipping the insulation panel with or connecting it to a power source is that in this case a measurement can be provided at regular intervals which can be transmitted to a nearby receiver or read-out device without the need for any user intervention. On the other hand, the advantage of not equipping an insulation panel with an own energy source or connecting it to one is that it keeps the structure of the insulating panel simple and there is no risk of malfunctioning in connection with the energy supply. In this case, energy is only transferred when the data is transmitted or shortly before data is transmitted.

The communication interface is preferably provided by means of a RFID-transmitter. However, it is also possible to use other communication interfaces, for example, a Bluetooth Low Energy (BLE) interface, an Ultra Low Power Bluetooth (ULP) interface and/or a Near Field Communication (NFC) interface.

Moreover, the sensor unit, the communication interface and the memory unit can be placed at different locations on or in the insulation panel, e.g. in different cavities in the insulation panel. However, it is preferred that the sensor unit, the communication interface and the memory unit are provided as an integrated part, for example, as a label which is adhered onto a suitable surface of the insulation panel, wherein at least the sensor unit has to be placed at a location suitable for measuring the moisture content or other data, e.g. temperature, pressure, radon exposure.

A memory unit is any unit capable of storing at least one identification data of an insulation panel so that this identification data can later be read-out and transmitted together with the moisture data or further sensor data. For example, such an identification data may be a serial number of the insulation panel or the sensor unit. When the insulation panel is laid, it is recorded and stored, preferably in a database, where the insulation panel was laid. Alternatively or additionally, position data can be generated in the read-out device, for example by means of a GPS unit provided in the read-out device, wherein the position data is transmitted from the read-out device to a computer unit when the sensor data is transmitted. For example, after a roof, a floor or a wall has been covered with respective insulation panels, the impermeability and the current moisture content is checked for the first time using a read-out device having a GPS-unit. While doing so, the moisture data, the identification data and the GPS-data are transmitted to a computer unit in which the position data of the insulation panels and the identification data can be stored. Alternatively or additionally, cloud solutions can also be used for transmitting or storing the data.

In other words, by means of the present invention, it can clearly be determined where a specific insulation panel is used and in later read-out processes, the moisture data and other sensor data can thus be assigned to a defined insulation panel. Moreover, it is possible to processes the data centrally. As a result, it is even possible that a non-expert uses a read-out device transmitting the moisture data and the identification data of the insulation panel to a computing unit, e.g. a centralized computer unit or a cloud computing unit, comprising an analysis unit, e.g. an analysis software. The analyzing software in turn analysis the provided data and provide respective notification massages, e.g. recommended actions, information about the current situation and so on. In other words, after analyzing the data a notification massage about the read-out data can be provided to the user, preferably even more or less in real-time. This data can be presented on dashboards, tablet, smartphones or the like.

It is preferred that the sensor unit further comprises at least one temperature sensor configured to provide temperature data, at least one pressure sensor configured to provide pressure data and/or an acoustic sensor configured to provide acoustic data. This makes it possible to record the load acting on the insulation panels and to determine which insulation panels are subject to a particularly high load, so that it can be determined at an early stage which panels are highly likely to need to be replaced earlier or which panels require more maintenance. In addition, in particular these data can be used to better plan future projects and to take into account the fact that a higher load will occur at certain points. Moreover, in particular by means of an acoustic sensor, it is possible to measure the sound insulation provided by the insulation panels.

As the sensor unit of the insulation panel is provided with a radon sensor configured to provide radon exposure data, the insulation panels can be advantageously used as flooring for sealing cellars. In case, the flooring is not gas-tight, radioactive radon can penetrate through the soil into the cellars of houses as odorless gas and thus into living rooms or working areas.

Preferably, the memory unit is further configured to store data referring to the material of the insulation panel. In this respect, it is further preferred that the insulation material of the insulation panel is Styrodur, Neopor, Styropor, mineral wool, rock wool, silica aerogel, polyurethane aerogel, polyurethane foam, organic materials, like cellulose or straw, or a mixture thereof. The information about the material of the insulation panel and/or the measured radon exposure can be used when insulation panels are removed providing information about a required waste treatment by means of a waste disposal massage.

A notification system according to the present invention comprises: at least one insulation panel as described above; at least one read-out device configured to establish a communication with the communication interface of the insulation panel and receive at least the moisture data and the identification data of the insulation panel; at least one analysis unit to which at least the moisture data and the identification data of the insulation panel is transmitted, preferably by the at least one read-out device, and wherein the at least one analysis unit is configured to provide notification massages based on the moisture data and the identification data of the insulation panel.

A read-out device can be provided by any device suitable to establish a communication with a communication interface of an insulation panel. Depending whether or not an insulation panel has its own energy source or is connected to such an energy source, the read-out device can be used to provide wireless energy transmission, for example by an inductive energy coupling or the like. Alternatively or additionally, it is also possible to use a separate power supply device and assign only the read-out function to the read-out device. The read-out device can be a handheld device or an on-site device positioned within a transmission range of the communication interface of at least one insulation panel such that a communication between the read-out device and the communication interface of the at least one insulation panel can be established and data can be transmitted. For example, one read-out device or several read-out devices can be positioned near the insulation panels such that, if required, energy can be provided to the insulation panels and respective read-outs can be performed at predetermined times.

Subsequently, the measured data can be transmitted to a cloud solution or a central computing unit for analyzing the transmitted data by the analysis unit. Preferably, the read-out device comprises a position determining unit, preferably a Global Positioning System (GPS), configured to assign to the measured data and identification data of the insulation panel positioning information data. It is further preferred that the at least one read-out device is further configured to receive not only the moisture data and the identification data, but also temperature data, pressure data and/or radon exposure data, wherein this data is also transmitted to the at least one analysis unit, preferably by the at least one read-out device, wherein the analysis unit is further configured to provide notification massages further based on the temperature data, pressure data and/or radon exposure data. In this respect, it is further preferred that the insulation panel and/or the on-site read-out device are configured to send and receive moisture data and identification data of the insulation panels in predetermined time intervals, wherein the insulation panel and the on-site device are preferably configured to further to send and receive temperature data, pressure data and/or radon exposure data.

Preferably, the analysis unit, e.g. implemented in a central computing device or provided by means of cloud computing, is configured to execute an analysis algorithm based on the results of a machine-learning algorithm. The machine-learning algorithm preferably comprises decision trees, naive bayes classifications, nearest neighbors, neural networks, convolutional neural networks, generative adversarial networks, support vector machines, linear regression, logistic regression, random forest and/or gradient boosting algorithms. Preferably, the machine-learning algorithm is organized to process an input having a high dimensionality into an output of a much lower dimensionality. Such a machine-learning algorithm is termed "intelligent" because it is capable of being "trained". The algorithm may be trained using records of training data. A record of training data comprises training input data and corresponding training output data. The training output data of a record of training data is the result that is expected to be produced by the machine-learning algorithm when being given the training input data of the same record of training data as input. The deviation between this expected result and the actual result produced by the algorithm is observed and rated by means of a "loss function". This loss function is used as a feedback for adjusting the parameters of the internal processing chain of the machine-learning algorithm. For example, the parameters may be adjusted with the optimization goal of minimizing the values of the loss function that result when all training input data is fed into the machine-learning algorithm and the outcome is compared with the corresponding training output data. The result of this training is that given a relatively small number of records of training data as "ground truth", the machine-learning algorithm is enabled to perform its job well for a number of records of input data that higher by many orders of magnitude.

It is preferred that the input data to the analysis algorithm is at least one of the following data: the moisture data, the temperature data, the pressure data and the radon data provided by the respective sensors of the insulation panels. In this respect, it is also preferred that the machine-learning algorithm is trained based on these input data.

Preferably, the at least one analysis unit provides at least one of the following notification massages:
- situation massage notifying an user about the read-out data assigned to at least one specific insulation panel;
- inspection massage notifying an user that at least one specific insulation panel has to be inspected;
- alarm massage notifying an user that at least one specific insulation panel has urgently to be replaced;
- alarm massage notifying an user that at least one specific insulation panel has a temperature above a predetermined value;
- waste disposal massage notifying an user which waste treatment at least one specific insulation panel requires.

A situation massage may contain information about present situation, i.e. about the read-out data, which can be presented on any suitable output device, e.g. dashboards, tablet, smartphones or the like. In this respect, the measured values can be assigned to each specific insulation panel and presented as a graphic or as numerical values. An inspection massage may contain information about areas where increased values have been measured, e.g. values which are still within a tolerance range, but which are higher with respect to other areas of the area covered by the insulation panels. An alarm massage may contain information that a breach has been detected and that it is highly likely that water may penetrating the covered area requiring an immediate attention for avoiding lager damages. An alarm massage with respect to the measured temperature may contain information that it is highly likely that a fire has been detected. Moreover, at least the alarm massages may simultaneously and directly be provided to third parties, e.g. emergency services, responsible fire departments, etc., which may issue and handle urgent actions.

The present invention also relates to the use of the moisture data, identification data, temperature data, pressure data and/or radon exposure data obtained from an insulation panel as described above for determining at least one of the following notification massages:
- situation massage notifying an user about the read-out data assigned to at least one specific insulation panel;
- inspection massage notifying an user that at least one specific insulation panel has to be inspected;
- alarm massage notifying an user that at least one specific insulation panel has urgently to be replaced;
- alarm massage notifying an user that at least one specific insulation panel has a temperature above a predetermined value;
- waste disposal massage notifying an user which waste treatment at least one specific insulation panel requires.

### BRIEF DESCRIPTION OF THE DRAWINGS

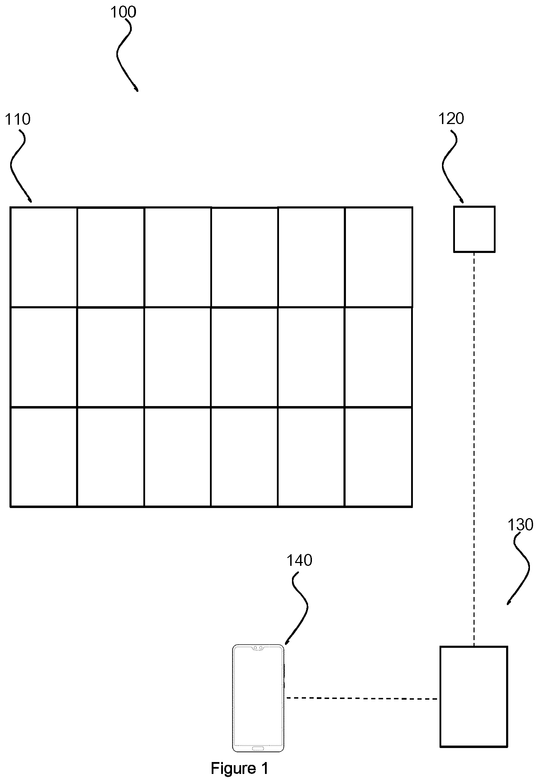

In the following, the invention is described exemplarily with reference to the enclosed figure, in which
- Figure 1: is a schematic view of a notification system according to the preferred embodiment of the present invention using insulation panels according to the preferred embodiment of the present invention.

### DETAILED DESCRIPTION OF EMBODIMENTS

Figure 1 is a schematic view of a notification system 100 according to the preferred embodiment of the present invention. The preferred notification system 100 comprises a plurality of insulation panels 110, at least one read-out device 120 and at least one computing device 130 and at least one output device 140.

The insulation panels 110 according to the preferred embodiment of the invention comprise a sensor unit, a communication interface and a memory unit. In the memory unit, identification data suitable to identify each one of the insulation panels 110, e.g. by means of a serial number, is stored. The sensor unit comprises a moisture sensor, a temperature sensor, a pressure sensor and a radon sensor for providing respective data. Notably, the flooring can be provided only by means of insulation panels according to the preferred embodiment of the present invention, i.e. comprising a sensor unit with at least one moisture sensor, at least one radon sensor, a communication interface and a memory unit. However, depending on the respective application, it is possible that only one or several such insulation panels are used and that the remaining area is covered with common insulation panels, i.e. without a sensor unit, a communication interface or a memory unit.

It is preferred that the insulation panels 110 do not comprise an own energy source for the senor unit, the communication interface or the memory unit for a stand-alone operation. In this respect, it is preferred that the required energy for measuring and communication is provided by the read-out device 120, for example, by means of an inductive coupling or the like as used in an RFID-device (radio-frequency identification device). However, depending on the specific installation conditions, it is also possible to add an energy source to one or more of the insulation panels 110, e.g. by an inductive rechargeable battery or by providing prefabricated conductors in the insulation panels 110 which can be connected to an energy source, e.g. at a centralized feed-in point.

The read-out device 120 in the shown preferred embodiment is an on-site device positioned within a transmission range of the communication interfaces of the insulation panels 110 such that a communication between the read-out device 120 and the communication interfaces of the insulation panels 110 can be established and data and energy can be transmitted. In an alternative embodiment, the read-out device 120 is a handheld device with which a user can walk over the insulation panels 120. It is preferred that the read-out device 120 comprises a GPS-unit such that respective positioning data can be assigned to the data of the sensor units.

In the preferred embodiment, the read-out device 120 is configured to transfer the sensor data, the identification data and the assigned positioning data to a computing device 130, e.g. a central computing device or a cloud computing device, comprising an analysis unit. However, it is also possible that the sensor data, the identification data and the assigned positioning data is transmitted to a cloud memory bevor an analysis of the data by the analysis unit is performed. By means of the analysis unit of the computing device 130, the provided data is analyzed and a respective notification massage is prepared and transmitted to the output device 140. In this respect, it is preferred that the analysis unit is configured to execute an analysis algorithm based on the results of a machine-learning algorithm, wherein it is preferred that the input data to the analysis algorithm is at least one of the following data: the moisture data, the temperature data, the pressure data and the radon data provided by the respective sensors of the insulation panels. In this respect, it is preferred that the machine-learning algorithm is also trained based on these input data. The output device 140 can be provided by any device comprising a display, e.g. a computer, laptop, smartphone, etc. Notably, the notification massages can be provided to a user and also to a data storage of a service provider for further analysis.

In the following, a method providing respective notification massages by the above explained notification system is explained:
In a first step, the insulation panels 110 are installed, e.g. on a floor, wall or roof, wherein additional layers or sealing may be applied below or above the insulation panels 110. The identification data of the insulation panels 110, e.g. a serial number of the insulation panel or of the used sensor unit, and the position of the insulation panel 110 is recorded and stored in a database. As a result, each laid insulation panel 110, identified by means of the stored identification data, it is known where it has been laid.

In a next step, a handheld read-out device is used to energize the sensor unit and the communication interface of the insulation panels 110 by placing the handheld read-out device near the respective insulation panels 110, e.g. by walking over the insulation panels 110 holding the handheld read-out device. After energizing the sensor unit and the communication interface of the insulation panels 110, the sensor data and the identification data is transmitted to the handheld read-out device. Moreover, it is preferred that also GPS-data provided the handheld read-out device is recorded and assigned to the measured data.

Subsequently, the data transmitted by the insulation panels 110 is in turn transmitted, preferably by the read-out device, to a computing device comprising an analyzing unit, wherein the data can be transmitted to the analyzing unit directly or via a cloud memory and wherein the computing device can be provided by a central computer or by a cloud computing solution. The analyzing unit is configured to execute an analysis algorithm, preferably based on the results of a machine-learning algorithm.

Finally, the analysis unit outputs at least one of the following notification massages onto one or more output devices 140:
- situation massage notifying an user about the read-out data assigned to at least one specific insulation panel;
- inspection massage notifying an user that at least one specific insulation panel has to be inspected;
- alarm massage notifying an user that at least one specific insulation panel has urgently to be replaced;
- alarm massage notifying an user that at least one specific insulation panel has a temperature above a predetermined value;
- waste disposal massage notifying an user which waste treatment at least one specific insulation panel requires.

A situation massage may contain information about present situation, i.e. about the read-out data, which can be presented on any suitable output device, e.g. dashboards, tablet, smartphones or the like. In this respect, the measured values can be assigned to each specific insulation panel and presented as a graphic or as numerical values.

An inspection massage may contain information about areas where increased values have been measured, e.g. values which are still within a tolerance range, but which are higher with respect to other areas of the area covered by the insulation panels.

An alarm massage may contain information that a breach has been detected and that it is highly likely that water may penetrating the covered area requiring an immediate attention for avoiding lager damages. An alarm massage with respect to the measured temperature may contain information that it is highly likely that a fire has been detected. Notably, such alarm massages may be provided directly to third parties such that urgent actions can be issued.

Notably, the above notification massages may be provided to a user or also to third parties, in particular, in case immediate actions are required. Moreover, in particular, the situation massages can be used to evaluate the long term specifics of the used insulation panels in order to provide data for planning future projects and to improve the life time of such insulation panels.

The present invention has been described in conjunction with a preferred embodiment as examples as well. However, other variations, within the scope of the appended claims, can be understood and effected by those persons skilled in the art and practicing the invention. In the claims as well as in the description the word "comprising" does not exclude other elements or steps and the indefinite article "a" or "an" does not exclude a plurality. A single element or other unit may fulfill the functions of several entities or items recited in the claims.

### Reference signs

- 100: Notification system
- 110: Insulation panel
- 120: Read-out device
- 130: Computing device
- 140: Out-put device

## Claims

1. Insulation panel (110) comprising:
- at least one sensor unit comprising at least one moisture sensor configured to provide moisture data;
- at least one communication interface configured to establish a communication with a read-out device and to transmit the moisture data to the read-out device;
- at least one memory unit configured to store identification data of the insulation panel,
**characterized in that** the sensor unit further comprises at least one radon sensor configured to provide radon exposure data.

2. Insulation panel (110) according to claim 1, wherein the sensor unit, the memory unit and the communication interface are provided as an integrated part, wherein the integrated part is preferably provided as a label, which is applied onto the insulation panel by means of an adhesive layer.

3. Insulation panel (110) according to claim 1 or 2, wherein the sensor unit further comprises at least one temperature sensor configured to provide temperature data.

4. Insulation panel (110) according to any one of the presiding claims, wherein the sensor unit further comprises at least one pressure sensor configured to provide pressure data and/or at least one acoustic sensor configured to provide acoustic data.

5. Insulation panel (110) according to any one of the presiding claims, wherein the memory unit is further configured to store data referring to the material of the insulation panel.

6. Insulation panel (110) according to any one of the presiding claims, wherein the insulation material of the insulation panel is Styrodur, Neopor, Styropor, mineral wool, rock wool, silica aerogel, polyurethane aerogel, polyurethane foam, organic materials, like cellulose or straw, or a mixture of these insulation materials.

7. Insulation panel (110) according to any one of the presiding claims, wherein the sensor unit, the communication interface and/or the memory unit are configured to collect energy transmitted by a read-out device.

8. Notification system (100) comprising:
- at least one insulation panel (110) according to any one of the claims 1 to 7;
- at least one read-out device (120) configured to establish a communication with the communication interface of the insulation panel (110) and receive at least the moisture data and the identification data of the insulation panel;
- at least one analysis unit (130) to which at least the moisture data and the identification data of the insulation panel is transmitted, preferably by the at least one read-out device (120), and wherein the at least one analysis unit (130) is configured to provide notification massages based on the moisture data and the identification data of the insulation panel (110).

9. Notification system (100) according to claim 8, wherein the at least one read-out device (120) is a handheld device or an on-site device positioned within a transmission range of the communication interface of at least one insulation panel (110) such that a communication between the read-out device (120) and the communication interface of the at least one insulation panel (110) can be established and data can be transmitted.

10. Notification system (100) according to claim 8 or 9, wherein the read-out device (120) comprises a position determining unit, preferably a Global Positioning System (GPS), configured to assign to the moisture data and identification data of the insulation panel (110) positioning information data.

11. Notification system (100) according to any one of the claims 8 to 10, wherein the at least one read-out device (120) is further configured to receive temperature data, pressure data and/or radon exposure data, wherein these data is transmitted to the at least one analysis unit (130), preferably by the at least one read-out device (120), wherein the analysis unit (130) is further configured to provide notification massages further based on the temperature data, pressure data and/or radon exposure data.

12. Notification system (100) according to any one of the claims 8 to 11, wherein the insulation panel (110) and the on-site device (130) are configured to send and receive moisture data and identification data of the insulation panel (110) in predetermined time intervals, wherein the insulation panel (110) and the on-site device (120) are preferably configured to further to send and receive temperature data, pressure data and/or radon exposure data.

13. Notification system according to any one of claims 8 to 12, wherein the at least one analysis unit (130) provides at least one of the following notification messages:
- situation message notifying an user about the read-out data assigned to at least one specific insulation panel (110);
- inspection message notifying an user that at least one specific insulation panel (110) has to be inspected;
- alarm message notifying an user that at least one specific insulation panel (110) has urgently to be replaced;
- alarm message notifying an user that at least one specific insulation panel (110) has a temperature above a predetermined value;
- waste disposal message notifying an user which waste treatment at least one specific insulation panel (110) requires.

14. Use of an insulation panel (110) according to any one of claims 1 to 7, which use comprises obtaining moisture data, identification data, temperature data, pressure data and/or radon exposure data from the insulation panel (110) and determining at least one of the following notification messages:
- situation message notifying an user about the read-out data assigned to at least one specific insulation panel (110);
- inspection message notifying an user that at least one specific insulation panel (110) has to be inspected;
- alarm message notifying an user that at least one specific insulation panel (110) has urgently to be replaced;
- alarm message notifying an user that at least one specific insulation panel (110) has a temperature above a predetermined value;
- waste disposal message notifying an user which waste treatment at least one specific insulation panel (110) requires.

## Patentansprüche

1. Isolierplatte (110), die Folgendes umfasst:
- mindestens eine Sensoreinheit, die mindestens einen Feuchtigkeitssensor umfasst, der konfiguriert ist, Feuchtigkeitsdaten bereitzustellen;
- mindestens eine Kommunikationsschnittstelle, die konfiguriert ist, eine Kommunikation mit einer Auslesevorrichtung einzurichten und die Feuchtigkeitsdaten an die Auslesevorrichtung zu übertragen;
- mindestens eine Speichereinheit, die konfiguriert ist, Kennungsdaten der Isolierplatte zu speichern, **dadurch gekennzeichnet, dass** die Sensoreinheit ferner mindestens einen Radon-Sensor umfasst, der konfiguriert ist, Radon-Expositionsdaten bereitzustellen.

2. Isolierplatte (110) nach Anspruch 1, wobei die Sensoreinheit, die Speichereinheit und die Kommunikationsschnittstelle als eine integrierte Komponente vorgesehen sind, wobei die integrierte Komponente vorzugsweise als eine Markierung vorgesehen ist, die mittels einer Haftschicht auf die Isolierplatte aufgebracht wird.

3. Isolierplatte (110) nach Anspruch 1 oder 2, wobei die Sensoreinheit ferner mindestens einen Temperatursensor umfasst, der konfiguriert ist, Temperaturdaten bereitzustellen.

4. Isolierplatte (110) nach einem der vorhergehenden Ansprüche, wobei die Sensoreinheit ferner mindestens einen Drucksensor, der konfiguriert ist, Druckdaten bereitzustellen, und/oder mindestens einen akustischen Sensor, der konfiguriert ist, akustische Daten bereitzustellen, umfasst.

5. Isolierplatte (110) nach einem der vorhergehenden Ansprüche, wobei die Speichereinheit ferner konfiguriert ist, Daten bezüglich des Materials der Isolierplatte zu speichern.

6. Isolierplatte (110) nach einem der vorhergehenden Ansprüche, wobei das Isoliermaterial der Isolierplatte Styrodur, Neopor, Styropor, Mineralwolle, Steinwolle, Kieselerde-Aerogel, Polyurethan-Aerogel, Polyurethanschaum, organische Materialien wie Zellulose oder Stroh oder eine Mischung dieser Isoliermaterialien ist.

7. Isolierplatte (110) nach einem der vorhergehenden Ansprüche, wobei die Sensoreinheit, die Kommunikationsschnittstelle und/oder die Speichereinheit konfiguriert sind, Energie zu erfassen, die durch eine Auslesevorrichtung übertragen wird.

8. Mitteilungssystem (100), das Folgendes umfasst:
- mindestens eine Isolierplatte (110) nach einem der Ansprüche 1 bis 7;
- mindestens eine Auslesevorrichtung (120), die konfiguriert ist, eine Kommunikation mit der Kommunikationsschnittstelle der Isolierplatte (110) einzurichten und zumindest die Feuchtigkeitsdaten und die Kennungsdaten der Isolierplatte zu empfangen;
- mindestens eine Analyseeinheit (130), an die zumindest die Feuchtigkeitsdaten und die Kennungsdaten der Isolierplatte vorzugsweise durch die mindestens eine Auslesevorrichtung (120) übertragen werden, wobei die mindestens eine Analyseeinheit (130) konfiguriert ist, auf der Grundlage der Feuchtigkeitsdaten und der Kennungsdaten der Isolierplatte (110) Mitteilungsnachrichten bereitzustellen.

9. Mitteilungssystem (100) nach Anspruch 8, wobei die mindestens eine Auslesevorrichtung (120) eine tragbare Vorrichtung oder eine Vorrichtung vor Ort, die innerhalb eines Übertragungsbereichs der Kommunikationsschnittstelle von mindestens einer Isolierplatte (110) angeordnet ist, ist, derart, dass eine Kommunikation zwischen der Auslesevorrichtung (120) und der Kommunikationsschnittstelle der mindestens einen Isolierplatte (110) eingerichtet werden kann und Daten übertragen werden können.

10. Mitteilungssystem (100) nach Anspruch 8 oder 9, wobei die Auslesevorrichtung (120) eine Positionsbestimmungseinheit, vorzugsweise ein globales Positionierungssystem (GPS,) umfasst, die konfiguriert ist, den Feuchtigkeitsdaten und den Kennungsdaten der Isolierplatte (110) Positionierungsinformationsdaten zuzuweisen.

11. Mitteilungssystem (100) nach einem der Ansprüche 8 bis 10, wobei die mindestens eine Auslesevorrichtung (120) ferner konfiguriert ist, Temperaturdaten, Druckdaten und/oder Radon-Expositionsdaten zu empfangen, wobei diese Daten vorzugsweise durch die mindestens eine Auslesevorrichtung (120) an die mindestens eine Analyseeinheit (130) übertragen werden, wobei die Analyseeinheit (130) ferner konfiguriert ist, Mitteilungsnachrichten bereitzustellen, die ferner auf den Temperaturdaten, den Druckdaten und/oder den Radon-Expositionsdaten beruhen.

12. Mitteilungssystem (100) nach einem der Ansprüche 8 bis 11, wobei die Isolierplatte (110) und die Vorrichtung (130) vor Ort konfiguriert sind, Feuchtigkeitsdaten und Kennungsdaten der Isolierplatte (110) in vorgegebenen Zeitintervallen zu senden und zu empfangen, wobei die Isolierplatte (110) und die Vorrichtung (120) vor Ort vorzugsweise konfiguriert sind, ferner Temperaturdaten, Druckdaten und/oder Radon-Expositionsdaten zu senden und zu empfangen.

13. Mitteilungssystem nach einem der Ansprüche 8 bis 12, wobei die mindestens eine Analyseeinheit (130) folgende Mitteilungsnachrichten bereitstellt:
- eine Situationsnachricht, die einen Anwender über die ausgelesenen Daten, die mindestens einer bestimmten Isolierplatte (110) zugewiesen sind, benachrichtigt; und/oder
- eine Prüfnachricht, die einen Anwender darüber benachrichtigt, dass mindestens eine bestimmte Isolierplatte (110) geprüft werden muss; und/oder
- eine Alarmnachricht, die einen Anwender darüber benachrichtigt, dass mindestens eine bestimmte Isolierplatte (110) dringend ausgetauscht werden muss; und/oder
- eine Alarmnachricht, die einen Anwender darüber benachrichtigt, dass mindestens eine bestimmte Isolierplatte (110) eine Temperatur über einem vorgegebenen Wert aufweist; und/oder
- eine Abfallentsorgungsnachricht, die einen Anwender darüber benachrichtigt, welche Abfallbehandlung mindestens eine bestimmte Isolierplatte (110) erfordert.

14. Verwendung einer Isolierplatte (110) nach einem der Ansprüche 1 bis 7, wobei die Verwendung das Erhalten von Feuchtigkeitsdaten, Kennungsdaten, Temperaturdaten, Druckdaten und/oder Radon-Expositionsdaten von der Isolierplatte (110) und das Bestimmen folgender Mitteilungsnachrichten umfasst:
- eine Situationsnachricht, die einen Anwender über die ausgelesenen Daten, die mindestens einer bestimmten Isolierplatte (110) zugewiesen sind, benachrichtigt; und/oder
- eine Prüfnachricht, die einen Anwender darüber benachrichtigt, dass mindestens eine bestimmte Isolierplatte (110) geprüft werden muss; und/oder
- eine Alarmnachricht, die einen Anwender darüber benachrichtigt, dass mindestens eine bestimmte Isolierplatte (110) dringend ausgetauscht werden muss; und/oder
- eine Alarmnachricht, die einen Anwender darüber benachrichtigt, dass mindestens eine bestimmte Isolierplatte (110) eine Temperatur über einem vorgegebenen Wert aufweist; und/oder
- eine Abfallentsorgungsnachricht, die einen Anwender darüber benachrichtigt, welche Abfallbehandlung mindestens eine bestimmte Isolierplatte (110) erfordert.

## Revendications

1. Panneau d'isolation (110) comprenant :
- au moins une unité de capteurs comprenant au moins un capteur d'humidité configuré pour fournir des données d'humidité ;
- au moins une interface de communication configurée pour établir une communication avec un dispositif de lecture et pour transmettre les données d'humidité au dispositif de lecture ;
- au moins une unité de mémoire configurée pour stocker des données d'identification du panneau d'isolation, **caractérisé en ce que** l'unité de capteurs comprend en outre au moins un capteur de radon configuré pour fournir des données d'exposition au radon.

2. Panneau d'isolation (110) selon la revendication 1, dans lequel l'unité de capteurs, l'unité de mémoire et l'interface de communication sont fournies sous la forme d'une pièce intégrée, la pièce intégrée étant de préférence fournie sous la forme d'une étiquette, qui est appliquée sur le panneau d'isolation au moyen d'une couche d'adhésif.

3. Panneau d'isolation (110) selon la revendication 1 ou 2, dans lequel l'unité de capteurs comprend en outre au moins un capteur de température configuré pour fournir des données de température.

4. Panneau d'isolation (110) selon l'une quelconque des revendications précédentes, dans lequel l'unité de capteurs comprend en outre au moins un capteur de pression configuré pour fournir des données de pression et/ou au moins un capteur acoustique configuré pour fournir des données acoustiques.

5. Panneau d'isolation (110) selon l'une quelconque des revendications précédentes, dans lequel l'unité de mémoire est également configurée pour stocker des données concernant le matériau du panneau d'isolation.

6. Panneau d'isolation (110) selon l'une quelconque des revendications précédentes, le matériau d'isolation du panneau d'isolation étant du Styrodur, du Neopor, du Styropor, de la laine minérale, de la laine de roche, un aérogel de silice, un aérogel de polyuréthane, de la mousse de polyuréthane, des matériaux organiques comme la cellulose ou la paille, ou un mélange de ces matériaux d'isolation.

7. Panneau d'isolation (110) selon l'une quelconque des revendications précédentes, dans lequel l'unité de capteurs, l'interface de communication et/ou l'unité de mémoire sont configurées pour collecter de l'énergie transmise par un dispositif de lecture.

8. Système de notification (100) comprenant :
- au moins un panneau d'isolation (110) selon l'une quelconque des revendications 1 à 7 ;
- au moins un dispositif de lecture (120) configuré pour établir une communication avec l'interface de communication du panneau d'isolation (110) et recevoir au moins les données d'humidité et les données d'identification du panneau d'isolation ;
- au moins une unité d'analyse (130) à laquelle au moins les données d'humidité et les données d'identification du panneau d'isolation sont transmises, de préférence par l'au moins un dispositif de lecture (120), et dans lequel l'au moins une unité d'analyse (130) est configurée pour fournir des messages de notification basés sur les données d'humidité et les données d'identification du panneau d'isolation (110).

9. Système de notification (100) selon la revendication 8, dans lequel l'au moins un dispositif de lecture (120) est un dispositif portatif ou un dispositif sur site positionné à l'intérieur d'une portée de transmission de l'interface de communication d'au moins un panneau d'isolation (110) de telle sorte qu'une communication entre le dispositif de lecture (120) et l'interface de communication de l'au moins un panneau d'isolation (110) peut être établie et des données peuvent être transmises.

10. Système de notification (100) selon la revendication 8 ou 9, dans lequel le dispositif de lecture (120) comprend une unité de détermination de position, de préférence un système de géolocalisation (GPS), configuré pour attribuer aux données d'humidité et aux données d'identification du panneau d'isolation (110) des données d'information de positionnement.

11. Système de notification (100) selon l'une quelconque des revendications 8 à 10, dans lequel l'au moins un dispositif de lecture (120) est également configuré pour recevoir des données de température, des données de pression et/ou des données d'exposition au radon, dans lequel ces données sont transmises à l'au moins une unité d'analyse (130), de préférence par l'au moins un dispositif de lecture (120), dans lequel l'unité d'analyse (130) est également configurée pour fournir des messages de notification également basés sur les données de température, les données de pression et/ou les données d'exposition au radon.

12. Système de notification (100) selon l'une quelconque des revendications 8 à 11, dans lequel le panneau d'isolation (110) et le dispositif sur site (130) sont configurés pour envoyer et recevoir des données d'humidité et des données d'identification du panneau d'isolation (110) dans des intervalles de temps prédéterminés, dans lequel le panneau d'isolation (110) et le dispositif sur site (120) sont de préférence configurés pour également envoyer et recevoir des données de température, des données de pression et/ou des données d'exposition au radon.

13. Système de notification selon l'une quelconque des revendications 8 à 12, dans lequel l'au moins une unité d'analyse (130) fournit au moins un des messages de notification suivants :
- message de situation indiquant à un utilisateur les données de lecture attribuées à au moins un panneau d'isolation (110) spécifique ;
- message d'inspection informant un utilisateur qu'au moins un panneau d'isolation (110) spécifique doit être inspecté ;
- message d'alarme informant un utilisateur qu'au moins un panneau d'isolation (110) spécifique doit être remplacé en urgence ;
- message d'alarme informant un utilisateur qu'au moins un panneau d'isolation (110) spécifique a une température supérieure à une valeur prédéterminée ;
- message d'élimination des déchets indiquant à un utilisateur le traitement des déchets que nécessite au moins un panneau d'isolation (110) spécifique.

14. Utilisation d'un panneau d'isolation (110) selon l'une quelconque des revendications 1 à 7, laquelle utilisation comprend l'obtention de données d'humidité, de données d'identification, de données de température, de données de pression et/ou de données d'exposition au radon depuis le panneau d'isolation (110) et la détermination d'au moins un des messages de notification suivants :
- message de situation indiquant à un utilisateur les données de lecture attribuées à au moins un panneau d'isolation (110) spécifique ;
- message d'inspection informant un utilisateur qu'au moins un panneau d'isolation (110) spécifique doit être inspecté ;
- message d'alarme informant un utilisateur qu'au moins un panneau d'isolation (110) spécifique doit être remplacé en urgence ;
- message d'alarme informant un utilisateur qu'au moins un panneau d'isolation (110) spécifique a une température supérieure à une valeur prédéterminée ;
- message d'élimination des déchets indiquant à un utilisateur le traitement des déchets que nécessite au moins un panneau d'isolation (110) spécifique.
